# EUROPÄISCHE PATENTSCHRIFT

(11) **EP 1 717 006 B1**
(45) Veröffentlichungstag und Bekanntmachung des Hinweises auf die Patenterteilung: **22.07.2009**
(21) Anmeldenummer: 06110368.5
(22) Anmeldetag: 24.02.2006
(51) Int. Cl.: B29C 41/34, B29C 41/18, B29C 41/22

(54) **Vorrichtung zur Herstellung von mehrfarbigen Kunststoff-Formhäuten**
Apparatus for manufacturing multicolour plastic skins.
Dispositif pour la fabrication de peaux multicolores en matière synthétique.

(30) Priorität: 29.04.2005 DE 102005020492
(43) Veröffentlichungstag der Anmeldung: 02.11.2006
(73) Patentinhaber: Benecke-Kaliko AG, 30419 Hannover (DE)
(72) Erfinder: André, Walter, 29699, Bomlitz (DE); Jacoby, Hans-Bernd, 31547, Rehburg-Loccum (DE); Heidkamp, Michael, 29386, Dedelstorf (DE)
(74) Vertreter: Finger, Karsten

(56) Entgegenhaltungen:
- EP-A- 0 451 558
- EP-A- 0 972 625
- US-A- 6 071 619
- PATENT ABSTRACTS OF JAPAN Bd. 009, Nr. 011 (M-351), 18. Januar 1985 (1985-01-18) & JP 59 159309 A (INOUE EMU TEE PII KK), 8. September 1984 (1984-09-08)
- PATENT ABSTRACTS OF JAPAN Bd. 014, Nr. 379 (M-1012), 16. August 1990 (1990-08-16) & JP 02 141213 A (INOUE MTP CO LTD), 30. Mai 1990 (1990-05-30)
- PATENT ABSTRACTS OF JAPAN Bd. 1997, Nr. 03, 31. März 1997 (1997-03-31) & JP 08 290433 A (KASAI KOGYO CO LTD), 5. November 1996 (1996-11-05)

## Beschreibung

Die Erfindung betrifft eine Vorrichtung zur Herstellung von mehrfarbigen Kunststoff-Formhäuten, insbesondere für Kraftfahrzeugteile wie z.B. Armaturenbretter und Türverkleidungen, nach dem Oberbegriff des Anspruchs 1.

Verfahren zur Herstellung zweifarbiger Slushhäute mit der "Maskentechnik" sind bekannt. Die EP 0 972 625 A1 beschreibt hierzu eine Einrichtung, nämlich eine Werkzeugform zur Herstellung von zweifarbigen Kunststoff-Formhäuten für Kraftfahrzeugteile, d.h. im Wesentlichen Armaturenbretter, Türverkleidungen etc. Das hier angewandte Herstellungsverfahren zur Erzeugung von Sinterfolien / Slushhäuten ist ein Rotationssintern, bei dem sich ein Kunststoffpulver in der rotierenden Werkzeugform befindet und an entsprechend geheizten Wandteilen der Werkzeugform anschmilzt.

Die hier gezeigte Einrichtung weist zwei verschiedene untere Teile der Werkzeugformkästen auf. Die unteren Teile der Werkzeugformkästen, welche jeweils auch das Pulverbett beinhalten, sind lösbar angeordnet in Bezug auf den einzigen oberen Werkzeugformkasten, an welchen das Kunststoffpulver anschmilzt. Für die Herstellung von zweifarbigen Kunststoff-Formhäuten weist nun der erste untere Formkasten einen schalenförmige und in den Innenraum ragenden Vorsprung auf, mit dem - wie mit einer Maske - Teile des oberen Formkastens abgedeckt werden.

In einem ersten Arbeitsgang wird durch Rotationssintern ein Pulver einer ersten Farbe angeschmolzen, wobei die unter der schalenförmigen Abdeckung liegenden Bereiche des oberen Formkastens nicht getroffen werden und somit frei von Pulver bleiben.

Vor einem zweiten Arbeitsgang wird der erste untere Formkasten durch einen zweiten unteren Formkasten ersetzt, der ein Pulver einer anderen Farbe beinhaltet und keine Abdeckungen aufweist. Beim nachfolgend wiederholten Rotationssintern schmilzt an dem vorher freigehaltene Bereich des oberen Formkastens und auf der Rückseite der schon bestehenden Formhaut das Pulver mit der neuen Farbe an. Nach Abkühlung und Entnahme der Formhaut aus dem Werkzeug erhält man auf der dem Werkzeug zugewandten und zukunftigen Außenseite eine zweifarbige Kunststoff-Formhaut.

Während des ersten Arbeitsschrittes muß die hierzu die schalenförmige und in den Innenraum ragende Abdeckung des unteren Formkasten sorgsam gegenüber dem oberen Formkasten abgedichtet werden, damit kein Sinterpulver der ersten Farbe in den Abdeckbereich gelangt. Hierzu weist der schalenförmige Vorsprung an seine Rändern Dichtungselemente auf, die elastisch und oder/innen hohl ausgebildet sind und ggf. innen mit Druck oder elastischen Medien beaufschlagt werden können.

Von Nachteil ist hierbei der hohe Arbeitsaufwand zum Wechsel der unteren Kastenformen sowie die schwierige Dichtung der Maske, d.h. der Dichtung zwischen den Rändern der schalenförmigen und in den Innenraum ragenden Abdeckung des unteren Formkasten und der Innenseite des oberen Formkastens. Hierbei führen Wärmedehnungen und unterschiedliche und durch komplizierte Innenformen des oberen Formkastens bedingte Druckverhältnisse der Dichtungen zu Undichtigkeiten und unregelmäßiger Anlage, wodurch die Farbgrenzen verwischen können.

Die JP 59 159309 A offenbart eine Werkzeugform zur Herstellung einer mehrfarbigen Kunststoffformhaut, in der mehrere Kunststoffpulver verschiedener Farbe nacheinander angeschmolzen werden können. Dabei sind die Teile der Form, in denen kein Pulver angeschmolzen werden **s**oll, mit einer Maske abgedeckt, die mit einer

Dichtung an einem Steg der Form anliegt, wobei die mit einer Dichtung versehene Anlage der Maske breiter ist als der in der Form befindliche Steg, so dass die Randbereiche der Abdeckung die Stege in Richtung der nicht abgedeckten und der abgedeckten Bereiche der Oberfläche mit einem Überstand überragen.

Der Erfindung lag also die Aufgabe zugrunde, eine Vorrichtung zur Herstellung von zweifarbigen Kunststoff-Formhäuten mittels Pulversintern bereitzustellen, mit welcher eine Abdeckung oder Maske leicht aufzubringen und zu entfernen ist, die eine exakte Farbtrennung ohne Verwischen der einzelnen Farb-Bereiche sicherstellt, und die für verschiedene Verfahren der Sintertechnik angepaßt werden kann.

Gelöst wir diese Aufgabe durch die Merkmale des Hauptanspruchs. Vorteilhafte Weiterbildungen sind in den Unteransprüchen erfasst.

Hierbei wird mindestens einer der durch die Stege begrenzten Bereiche der Oberfläche während eines Anschmelzen von Kunststoffpulver einer Farbe mit einer Abdeckung oder Maske versehen, die mit ihren Randbereichen auf den Stegen aufliegt, wobei die Randbereiche der Abdeckung die Stege in Richtung der nicht abgedeckten Bereiche der Oberfläche mit einem Überstand überragen.

In den abgedeckten und durch Stege begrenzten Bereichen der Oberfläche sind Einrichtungen zur Erzeugung eines Überdrucks vorhanden, vorzugsweise Anschlüsse an Druckleitungen. Hierdurch vermeidet man sicher das Eindringen von Pulverpartikeln in die abgedeckten Bereiche. Zusätzlich läßt sich beispielsweise durch über den Dichtungsspalt austretende Druckluft der Aufbau von Pulverschüttungen und somit eine Vedickungen der Pulverschicht im Randbereich der Abdeckung verringern.

Hierdurch erreicht man eine exakte Farbtrennung ohne Verwischen der einzelnen Farb-Bereiche und vermeidet das bei den Sinterverfahren, die ja mit dem Aufbringen von Pulver arbeiten, übliche Einbrechen und Verlaufen von Pulveranhäufungen. Bei den bisher bekannten Verfahren baut sich nämlich an den Rändern von Abdeckschalen eine Häufung der Pulverschüttung und somit eine Vedickung der Pulverschicht auf, die nach Abheben der Abdeckung in Richtung auf die abgedeckten Bereiche einbricht und den Farbverlauf verwischt.

Eine vorteilhafte Ausbildung besteht darin, dass der Überstand in allen Richtungen zwischen 1 und 5 mm, vorzugsweise 2 mm beträgt. Dies ist ein Überstand, der mit den üblichen Siebverteilungen / Körnergrößen der Sinterpulver die bisher besten Ergebnisse liefert.

Eine weitere vorteilhafte Ausbildung besteht darin, dass die Randbereiche der Abdeckung Dichtungen aufweisen, die auf den Stegen aufliegen. Hierdurch wird eine sichere Abdeckung der von den Stegen begrenzten bzw. eingeschlossenen Bereiche erreicht.

Eine weitere vorteilhafte Ausbildung besteht darin, dass die Dichtungen aus dauerelastischem und temperaturfestem Material hergestellt sind, vorzugsweise aus Polyurethan oder Silikonkautschuk. Hierdurch erreicht man auch über eine lange Anwendungszeit und thermische Wechselbelastungen eine saubere Kantenbildung zwischen den einzelnen Farb- bzw. Sinterbereichen.

Eine weitere vorteilhafte Ausbildung besteht darin, dass die Abmessungen der Abdeckungen oder Masken eine Wärmedehnung des mit Stegen versehenen Formwerkzeuges kompensieren. Bei den für den Sinterprozeß erforderlichen Temperaturen von 180 bis 250° C machen sich die durch Wärmeübergang nachfolgenden Dehnungen der Randbereiche der Abdeckungen stark bemerkbar und führen zu Undichtigkeiten, wenn nicht eine solche Kompensationsmaßnahme gleich bei der Konstruktion der Abdeckungen vorgesehen wird.

Eine weitere vorteilhafte Ausbildung besteht darin, dass die Dichtungen hohl ausgebildet und mit Innendruck beaufschlagbar sind. Ein solche Maßnahme kann allein oder als Unterstützung zur Innendruckbeaufschlagung der abgedeckten Bereiche sinnvoll sein, um die Dichtwirkung zu verstärken oder zu steuern.

Eine weitere vorteilhafte Ausbildung besteht darin, dass die Dichtungen Druckaustrittsöffnungen in Richtung der Stege aufweisen. Hierdurch wird sowohl ein Austreten von Dichtmedium über den Dichtungsspalt erreicht, wodurch der Aufbau von Pulverschüttungen verringert wird, als auch die Erzeugung eines Überdrucks im den abgedeckten und durch Stege begrenzten Bereich der Oberfläche.

Eine besonders vorteilhafte Verwendung der Vorrichtung ergibt sich bei der Herstellung von Kunststoff-Formhäuten durch Sprühsintern. Bei Sprühverfahren ergibt sich nämlich durch den bei den verwendeten Sprühdüsen entstehenden "Overspray", d.h. den sich bildenden Sprühnebel-Kegel, eine besonders ausgeprägte Pulverschüttung und Vedickung der Pulverschicht an den Randbereichen der Abdeckung, die nun durch die erfindungsgemäße Vorrichtung in ihren schädlichen Wirkungen reduziert werden kann.

Eine ebenso vorteilhafte Verwendung der Vorrichtung ergit sich für die für die Herstellung von Kunststoff-Formhäuten durch Rotationssintern, da es durch in den Randbereiche von Stegen oder Abdeckung entstehende Stau-Wärme ebenfalls zu erhöhter ausgeprägte Pulveransammlung und Vedickung der Pulverschicht kommen kann.

Anhand eines Ausführungsbeispieles soll die Erfindung näher erläutert werden. Es zeigen
- Fig. 1: einen Randbereich einer auf einem Trennsteg aufliegenden Abdeckung der erfindungsgemäßen Vorrichtung
- Fig. 2: einen Querschnitt durch eine Dichtung des Randbereiches

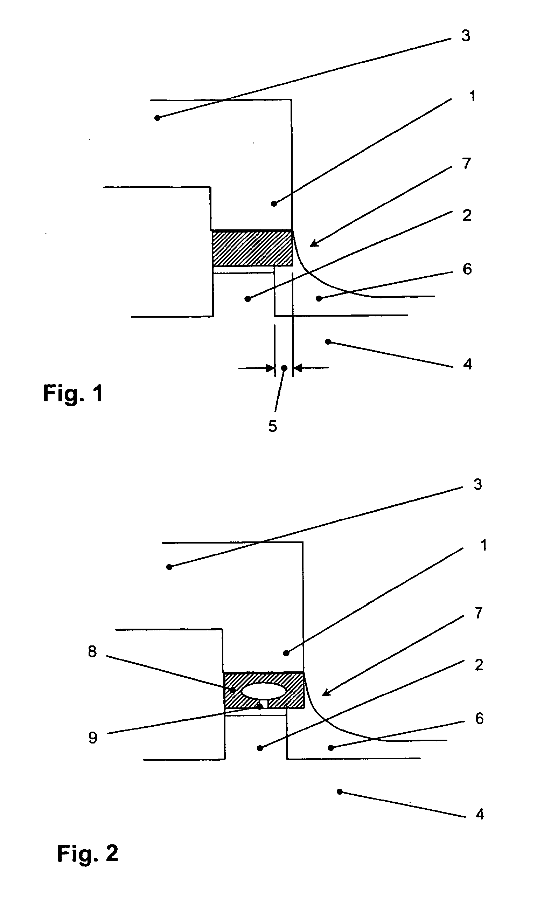

Die Figur 1 zeigt einen Randbereich 1 einer auf einem Trennsteg 2 aufliegenden Abdeckung oder Maske 3 einer erfindungsgemäßen Vorrichtung. Der Trennsteg 2 befindet sich dabei in der Oberfläche eines Formwerkzeuges 4. Der Randbereich 1 der Abdeckung 3 überragt den Trennstege 2 in Richtung der nicht abgedeckten Bereiche der Oberfläche mit einem Überstand 5.

Beim Sinterverfahren, d.h. beim Aufschmelzen eine Pulverschicht 6 baut sich an den Rändern der Abdeckung 3 ein Häufung der Pulverschüttung und somit eine Vedickung 7 der Pulverschicht 6 auf, die nach Abheben der Abdeckung in Richtung auf die nicht abgedeckten Bereiche einbricht. Bei der hier gezeigten Vorrichtung kann dies aber nicht zu einem Verwischen des Farbverlaufes führen, da die Verdikung lediglich in den vorher "freigehaltenen" Bereich des Überstandes 5 kippen kann.

Figur 2 zeigt dieselbe Vorrichtung mit einem Querschnitt durch eine hohl ausgebildete und mit Innendruck beaufschlagte Dichtung 8, wodurch die Dichtwirkung verstärkt oder gesteuert werden kann.

Die Dichtung weist dabei Druckaustrittsöffnungen 9 in Richtung des Steges 2 auf. Hierdurch wird sowohl ein Austreten von Dichtmedium über den Dichtungsspalt erreicht, wodurch der Aufbau von Pulverschüttungen ebenso verringert wird, wie auch die Erzeugung eines Überdrucks im den abgedeckten und durch Stege begrenzten Bereich der Oberfläche

### Bezugszeichenliste

### (Teil der Beschreibung)

- 1: Randbereich
- 2: Trennsteg
- 3: Maske oder Abdeckung
- 4: Formwerkzeug
- 5: Überstand
- 6: Pulverschicht
- 7: Verdickung
- 8: Dichtung
- 9: Druckaustrittsöffnung

## Patentansprüche

1. Vorrichtung zur Herstellung von mehrfarbigen Kunststoff-Formhäuten für Kraftfahrzeugteile wie z.B. Armaturenbretter und Türverkleidungen, wobei die Kunststoff-Formhäute im Sinterverfahren durch ein nacheinander erfolgendes mehrfaches kontinuierliches Anschmelzen von Kunststoffpulver verschiedener Farbe an einer Oberfläche eines erwärmten Formwerkzeuges aufgebaut werden, wobei die mit Kunststoffpulver unterschiedlicher Farbe versehenen / gesinterten Bereiche der Oberfläche des Formwerkzeugs durch Vorsprünge oder Stege (2) auf der Oberfläche voneinander getrennt sind, wobei mindestens einer der durch die Stege begrenzten Bereiche der Oberfläche während eines Anschmelzen von Kunststoffpulver einer Farbe mit einer Abdeckung oder Maske (3) versehen wird, die mit ihren Randbereichen (1) auf den Stegen aufliegt, wobei die Randbereiche der Abdeckung die Stege in Richtung der nicht abgedeckten Bereiche der Oberfläche mit einem Überstand (5) überragen, **dadurch gekennzeichnet, dass** in den abgedeckten und durch Stege begrenzten Bereichen der Oberfläche Einrichtungen zur Erzeugung eines Überdrucks vorhanden sind.

2. Vorrichtung nach Anspruch 1, durch **gekennzeichnet**, dass der Überstand in allen Richtungen zwischen 1 und 5 mm, vorzugsweise 2 mm beträgt.

3. Vorrichtung nach Anspruch 1 oder 2, durch **gekennzeichnet**, dass die Randbereiche der Abdeckung Dichtungen (8) aufweisen, die auf den Stegen aufliegen.

4. Vorrichtung nach Anspruch 3, durch **gekennzeichnet**, dass die Dichtungen aus dauerelastischem und temperaturfestem Material hergestellt sind, vorzugsweise aus Polyurethan oder Silikonkautschuk.

5. Vorrichtung nach Ansprüche 3 bis 4, durch **gekennzeichnet**, dass die Dichtungen hohl ausgebildet und mit Innendruck beaufschlagbar sind.

6. Vorrichtung nach Anspruch 5, durch **gekennzeichnet**, dass die Dichtungen Druckaustrittsöffnungen in Richtung der Stege aufweisen.

7. Verwendung der Vorrichtung nach Anspruch 1 bis 6 für die Herstellung von Kunststoff-Formhäuten durch Sprühsintern.

8. Verwendung der Vorrichtung nach Anspruch 1 bis 6 für die Herstellung von Kunststoff-Formhäuten durch Rotationssintern.

## Claims

1. Apparatus for manufacturing multicoloured slush skins for parts of a motor vehicle, such as for example dashboards and door trim, the slush skins being built up in a sintering process by continuously and repeatedly making polymer powder of different colours begin to melt successively on a surface of a heated mould, the regions of the surface of the mould that are sintered/provided with polymer powder of different colours being separated from one another by projections or fins (2) on the surface, at least one of the regions of the surface that are bounded by the fins being provided with a covering or mask (3) while polymer powder of one colour is made to begin melting, said covering or mask resting with its edge regions (1) on the fins, the edge regions of the covering protruding beyond the fins in the direction of the non-covered regions of the surface with an overhang (5), **characterized in that** devices for producing a positive pressure are present in the regions of the surface that are covered and bounded by fins.

2. Apparatus according to Claim 1, **characterized in that** the overhang is between 1 and 5 mm, preferably 2 mm, in all directions.

3. Apparatus according to Claim 1 or 2, **characterized in that** the edge regions of the covering have seals (8), which rest on the fins.

4. Apparatus according to Claim 3, **characterized in that** the seals are produced from permanently flexible and heat-resistant material, preferably from polyurethane or silicone rubber.

5. Apparatus according to Claim 3 or 4, **characterized in that** the seals are of a hollow form and can be subjected to internal pressure.

6. Apparatus according to Claim 5, **characterized in that** the seals have pressure outlet openings in the direction of the fins.

7. Use of the apparatus according to Claims 1 to 6 for manufacturing slush skins by spray sintering.

8. Use of the apparatus according to Claims 1 to 6 for manufacturing slush skins by rotational sintering.

## Revendications

1. Dispositif de fabrication de peaux moulées en matière synthétique polychrome pour pièces de véhicules automobiles, par exemple tableaux de bord et habillages de portes,
les peaux moulées en matière synthétique étant obtenues par une opération de frittage en continu par plusieurs fusions successives de poudres de matière synthétique de différentes couleurs à la surface d'un outil de moulage chauffé, les parties de la surface de l'outil de moulage dotées de poudres frittées de matière synthétique de différentes couleurs étant séparées les unes des autres à la surface par des saillies ou nervures (2).
au moins une des parties de la surface délimitées par les nervures étant dotée lors de la fusion de poudre de matière synthétique d'une couleur d'un recouvrement ou masque (3) qui repose sur les nervures par ses bordures (1), les bordures du recouvrement débordant d'une distance de débord (5) en direction des parties non recouvertes de la surface,
**caractérisé en ce que**
des dispositifs de formation d'une surpression sont prévus dans les parties de la surface recouvertes et délimitées par des nervures.

2. Dispositif selon la revendication 1, **caractérisé en ce que** la distance de débord est comprise entre 1 et 5 mm et est de préférence de 2 mm dans toutes les directions.

3. Dispositif selon les revendications 1 ou 2,
**caractérisé en ce que** les bordures du recouvrement présentent des joints d'étanchéité (8) qui reposent sur les nervures.

4. Dispositif selon la revendication 3, **caractérisé en ce que** les joints d'étanchéité sont réalisés en un matériau à élasticité permanente et résistant aux hautes températures, de préférence en polyuréthane ou en caoutchouc de silicone.

5. Dispositif selon les revendications 3 et 4,
**caractérisé en ce que** les joints d'étanchéité sont creux et **en ce qu'**une pression intérieure peut leur être appliquée.

6. Dispositif selon la revendication 5, **caractérisé en ce que** les joints d'étanchéité présentent des ouvertures de sortie de pression en direction des nervures.

7. Utilisation du dispositif selon les revendications 1 à 6 pour la fabrication de peaux moulées en matière synthétique par frittage par pulvérisation.

8. Utilisation du dispositif selon les revendications 1 à 6 pour la fabrication de peaux moulées en matière synthétique par frittage par rotation.
